# EUROPEAN PATENT APPLICATION

(11) **EP 4 769 124 A1**
(43) Date of publication of application: **01.07.2026**
(21) Application number: 25225682.1
(22) Date of filing: 19.12.2025
(51) Int. Cl.: G06F 8/65, G06F 9/4401

(54) **INFORMATION PROCESSING APPARATUS AND COMPUTER-READABLE MEDIUM**

(30) Priority: 24.12.2024 JP 2024227787
(71) Applicant: ETRIA Co., Ltd., Yokohama, Kanagawa 220-0011 (JP)
(72) Inventor: SAKURAI, Atsushi, Yokohama, 220-0011 (JP)
(74) Representative: J A Kemp LLP

(57) **Abstract**

An information processing apparatus includes: a first storage medium storing a startup program configured to start an operating system; a second storage medium storing startup data of the operating system; a third storage medium storing one or more pieces of software and user data; and an update processor configured to update at least one of the startup data and the software. The update processor is configured to: when updating the startup data, store updated startup data in the third storage medium; start the operating system using the updated startup data stored in the third storage medium; store, in the third storage medium, the startup data stored in the second storage medium; and replace the startup data stored in the second storage medium with the updated startup data.

## Description

### BACKGROUND

### Technical Field

The present disclosure relates to an information processing apparatus and a computer-readable medium.

### Related Art

Conventionally, there has been known a technique of creating a backup of startup data at the time of updating startup data or software of an operating system (OS) of an information processing apparatus so as to enable startup using the backup when a failure occurs at the time of update. Here, the startup data is a kernel and an initial random access memory (RAM) disk used at the time of startup of the OS. In addition, these pieces of startup data are normally stored in Electrically Erasable Programmable Read-Only Memory (EEPROM) having a relatively high operation speed, and a backup of the startup data is normally created in the EEPROM as well.

### BRIEF DESCRIPTION OF THE DRAWINGS

FIG. 1 is a hardware configuration diagram of an information processing apparatus according to a first embodiment;
FIG. 2 is a functional block diagram of an update processing unit (update processor) according to the first embodiment;
FIGS. 3A to 3C are diagrams each illustrating a state of the update processing according to the first embodiment;
FIG. 4 is a flowchart illustrating a procedure of the update processing according to the first embodiment;
FIG. 5 is a functional block diagram of an update processing unit according to a second embodiment;
FIGS. 6A to 6D are diagrams each illustrating a state of patch application processing according to the second embodiment;
FIG. 7 is a flowchart illustrating a procedure of the patch application processing according to the second embodiment;
FIG. 8 is a functional block diagram of the update processing unit according to the second embodiment;
FIGS. 9A to 9D are diagrams each illustrating an example of flag information according to a third embodiment;
FIGS. 10A to 10D are diagrams each illustrating another example of the flag information according to the third embodiment; and
FIG. 11 is a flowchart illustrating a procedure of update processing according to the third embodiment.

The accompanying drawings are intended to depict exemplary embodiments of the present invention and should not be interpreted to limit the scope thereof. Identical or similar reference numerals designate identical or similar components throughout the various drawings.

### DETAILED DESCRIPTION

An information processing apparatus according to an embodiment includes a first storage medium, a second storage medium, a third storage medium, and an update processor. The first storage medium stores a startup program configured to start an operating system. The second storage medium stores startup data of the operating system, and has a storage capacity equal to or larger than a storage capacity of the first storage medium. The third storage medium stores one or more pieces of software and user data, and has a storage capacity larger than the storage capacity of the second storage medium. The update processor is configured to update at least one of the startup data and the software. The update processor is configured to: when updating the startup data, store updated startup data in the third storage medium; start the operating system using the updated startup data stored in the third storage medium; store, in the third storage medium, the startup data stored in the second storage medium; and replace the startup data stored in the second storage medium with the updated startup data.

An embodiment may provide an information processing apparatus and a program capable of preventing shortage of a storage capacity of the EEPROM in backup operations of startup data created at the time of update.

An embodiment of the present invention will be described in detail below with reference to the drawings.

### First embodiment

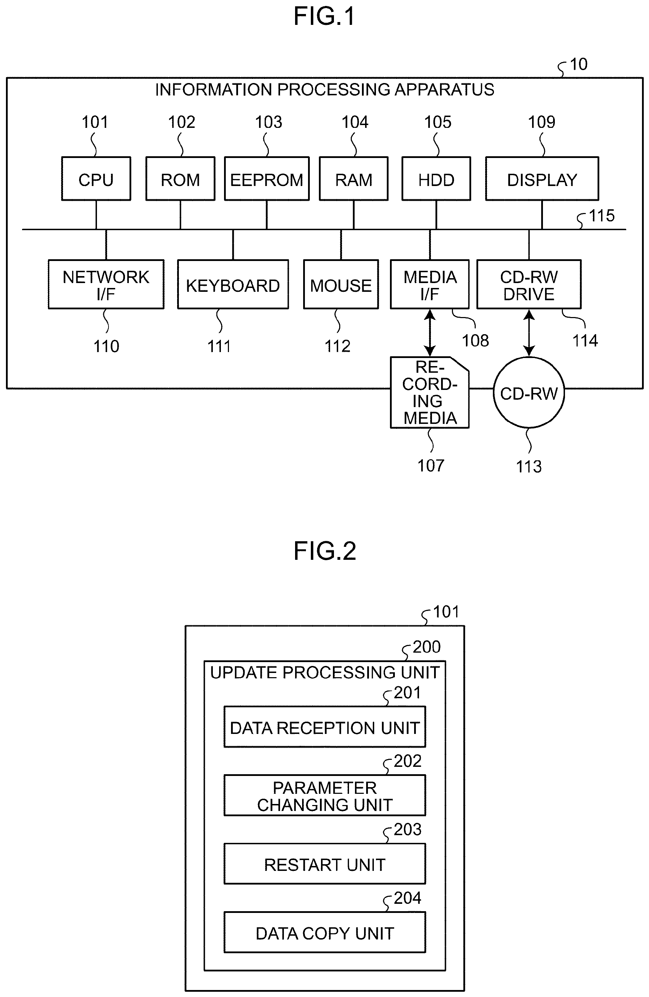

FIG. 1 is a hardware configuration diagram of an information processing apparatus according to a first embodiment.

An information processing apparatus 10 includes a central processing unit (CPU) 101, read only memory (ROM) 102, erasable and programmable read only memory (EEPROM) 103, random access memory (RAM) 104, a hard disk drive (HDD) 105, a media I/F 108, a display 109, a network I/F 110, a keyboard 111, a mouse 112, a compact disc-re writable (CD-RW) drive 114, and a bus line 115.

The CPU 101 controls the overall operation of the information processing apparatus 10.

The ROM 102 is a device that stores a program (startup program) configured to start the OS. The startup program is, for example, an OS boot program. The ROM 102 is an example of a first storage medium, and is referred to as a storage device 1 in the present exemplary embodiment. The first storage medium may be implemented by using the EEPROM instead of the ROM.

The EEPROM 103 is a device that stores data (startup data) used at startup of the OS. The startup data is, for example, a kernel of the OS and an initial RAM disk. The EEPROM 103 has a storage capacity equal to or larger than the storage capacity of the ROM 102. The EEPROM 103 is an example of a second storage medium and is referred to as a storage device 2 in the present exemplary embodiment.

The RAM 104 is memory used as a work area of the CPU 101.

The HDD 105 is a device that stores various types of data such as a Root File System (RFS), software, and user data. In the present embodiment, the RFS and the software are collectively referred to as software or the like. The HDD 105 has a larger storage capacity than the EEPROM 103. The HDD 105 is an example of a third storage medium, and is referred to as a storage device 3 in the present exemplary embodiment. The third storage medium may be implemented by using a solid state drive (SSD) instead of the HDD.

The media I/F 108 controls data reading or writing (storing) to or from the recording medium 107 such as flash memory.

The display 109 displays various types of information such as a cursor, a menu, a window, a character, or an image.

The network I/F 110 is an interface for performing data communication using a communication network 100.

The keyboard 111 is a type of input unit including a plurality of keys for inputting characters, numerical values, various instructions, and the like. The mouse 112 is a type of input unit that performs selection and execution of various instructions, selection of a processing target, movement of a cursor, and the like.

The CD-RW drive 114 controls reading or writing of various data to or from a CD-RW 113 as an example of a detachable recording medium.

The information processing apparatus 10 may further include a configuration of controlling data reading or writing (storing) from/to an external personal computer (PC) or an external device connected through a wired communication or a wireless communication such as Wireless Fidelity (Wi-Fi).

The CD-RW drive 114 may be replaced with a CD-R drive or the like. Furthermore, the information processing apparatus 10 may be constructed by a single computer, or may be constructed by a plurality of computers each having an optionally assigned part obtained by dividing each unit (function, means, or storage unit).

FIG. 2 is a functional block diagram of an update processing unit 200 according to the first embodiment. The update processing unit 200 is implemented by a command of the CPU 101 illustrated in FIG. 1, and performs processing (update processing) necessary for updating startup data and software. The update processing unit 200 includes a data reception unit 201, a parameter changing unit 202, a restart unit 203, and a data copy unit 204.

The data reception unit 201 receives update data such as startup data and software or the like. The update data includes updated startup data, and updated software or the like. The update data may be either data read by the media I/F 108 or data received by the network I/F 110.

The parameter changing unit 202 changes a parameter (startup parameter) indicating a read destination of the startup data or changes a partition (execution partition) for execution of software or the like.

The restart unit 203 restarts the OS during the update processing of the startup data and software.

The data copy unit 204 creates a copy or backup of startup data and software data.

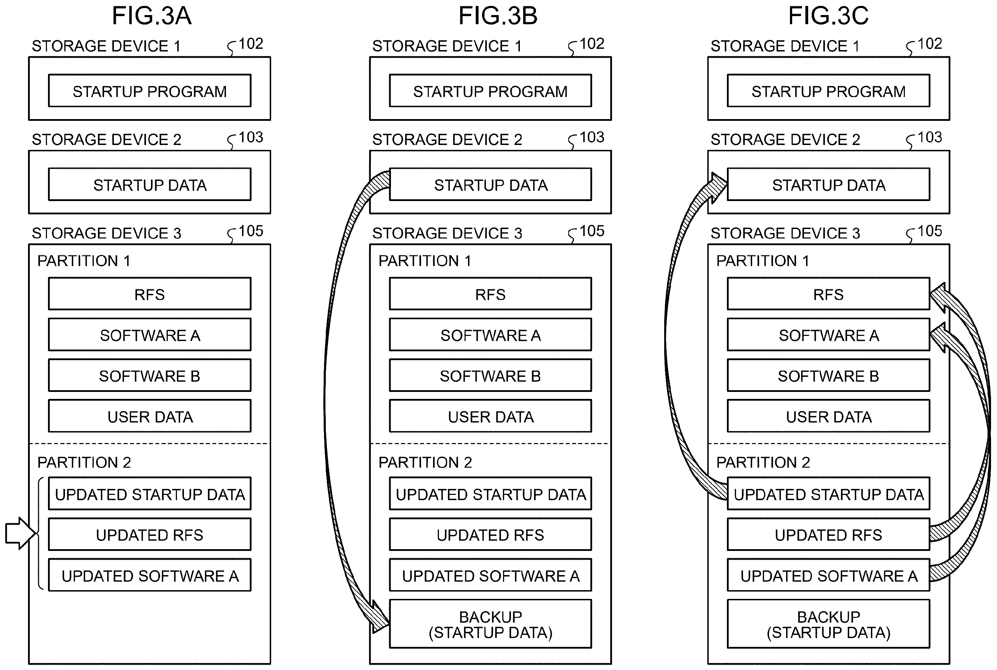

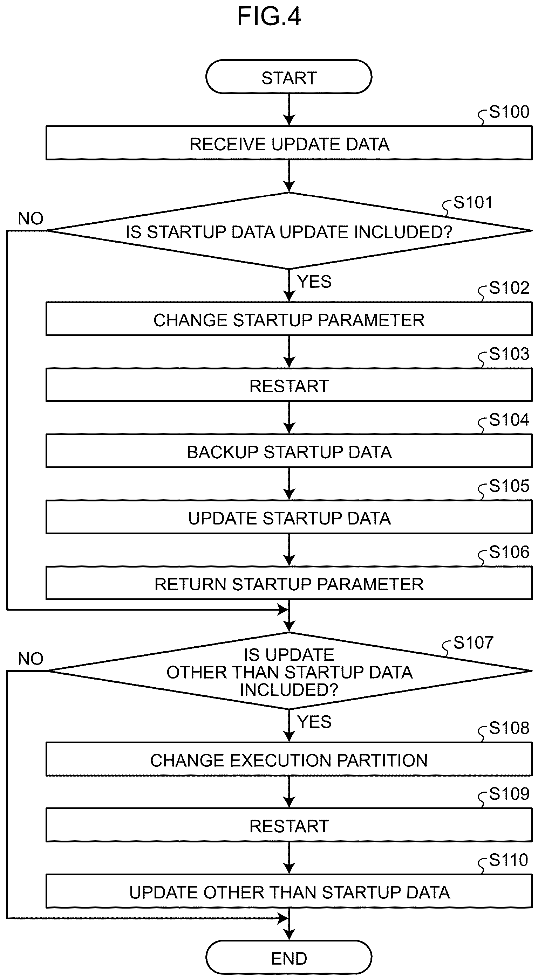

Next, the update processing of the present embodiment will be described with reference to FIGS. 3A to 3C and FIG. 4. FIGS. 3A to 3C are diagrams each illustrating a state of the update processing according to the first embodiment. FIG. 4 is a flowchart illustrating a procedure of update processing according to the first embodiment.

First, the data reception unit 201 receives update data (step S100). The received update data is stored in the storage device 3 (HDD 105). In the example of FIGS. 3A to 3C, the updated startup data, RFS, and software A are received and stored in partition 2 of the storage device 3 (FIG. 3A). This example assumes that the storage device 3 includes partition 1 and partition 2 as logical partitions, and that partition 1 stores RFS, software A, software B, user data, and the like before the update. The logical partition is an example of a region in the third storage medium.

Next, when the updated startup data is included in the update data (step S101: Yes), the parameter changing unit 202 changes the startup parameter so that the update startup data is to be used at the next startup of the OS (step S102). Subsequently, the restart unit 203 restarts the OS (step S103).

In contrast, when the updated startup data is not included in the update data (step S101: No), the processing proceeds to step S107.

When the OS startup is performed by the restart in step S103, the data copy unit 204 backs up the startup data of the storage device 2 to the storage device 3 (step S104). In the example of FIGS. 3A to 3C, the startup data before the update is copied to partition 2 of the storage device 3 as a backup (FIG. 3B).

Subsequently, the data copy unit 204 updates the startup data (step S105). Specifically, the data copy unit 204 copies the updated startup data to the storage device 2 and deletes the startup data before the update. That is, the data copy unit 204 replaces the startup data before the update of the storage device 2 with the updated startup data. With this operation, the startup data of the storage device 2 will be the updated startup data. In the example of FIGS. 3A to 3C, the startup data before the update in partition 2 of the storage device 3 is replaced with the updated startup data (FIG. 3C).

Subsequently, the parameter changing unit 202 returns the startup parameter to the original state (step S106). Specifically, the parameter changing unit 202 changes the startup parameter so that the updated startup data stored in the storage device 2 is to be used at the next startup of the OS.

When the updated data other than the startup data is included in the update data (step S107: Yes), the parameter changing unit 202 changes the execution partition so that the update software or the like is to be executed at the next startup of the OS (step S108). In the example of FIGS. 3A to 3C, the execution partition for software A is changed from partition 1 to partition 2. Subsequently, the restart unit 203 restarts the OS (step S109).

In contrast, when the updated data other than the startup data is not included in the update data (step S107: No), the processing ends.

When the OS starts by the restart in step S109, the data copy unit 204 performs update other than the startup data (step S110). Specifically, the data copy unit 204 replaces the software or the like before the update with the updated software or the like. This allows for double storage of the updated software and the like in the storage device 3. In the example of FIGS. 3A to 3C, the RFS and software A before update in partition 1 of the storage device 3 are replaced with the updated RFS and software A in partition 2 (FIG. 3C).

In this manner, according to the present embodiment, the backup of the startup data created at the time of update is stored in the storage device 3 having a large storage capacity, making it possible to prevent the shortage of the storage capacity of the EEPROM 103 during the backup.

Furthermore, with the update processing performed as described above in the present embodiment, even when a failure occurs in the update (replacement) of the startup data, the OS can be restarted using the backup of the startup data before update, and the startup data can be updated again.

Furthermore, according to the present embodiment, it is possible to receive update data and store the update data in the storage device 3 in the background without stopping the normal operation of the information processing apparatus 10. Incidentally, in a case where the update processing includes software installation and restart is requested for the installation, the installation may be scheduled to be executed at night, on holidays, or the like in which normal operation is unnecessary.

In addition, the present embodiment allows for double storage of the same updated software or the like in different partitions. Therefore, even when damage occurs in one partition, it is possible to recover with data of the other partition.

### Second embodiment

In a second embodiment, software update is performed by further applying a patch. Hereinafter, in the description of the second embodiment, description of the same parts as those of the first embodiment will be omitted, and portions different from those of the first embodiment will be described.

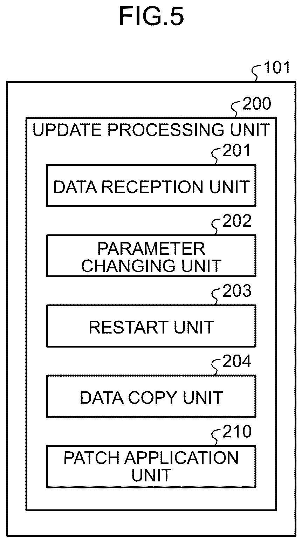

FIG. 5 is a functional block diagram of an update processing unit 200 according to the second embodiment. A difference from FIG. 2 is that the update processing unit 200 further includes a patch application unit 210.

The patch application unit 210 applies a patch to the software to be updated so as to perform update of the software.

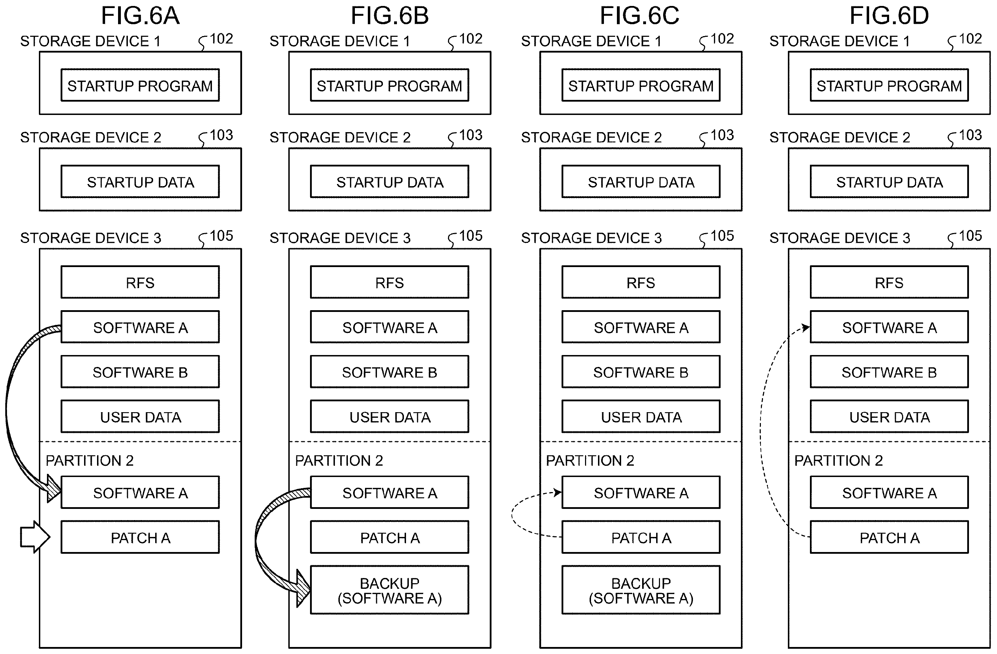

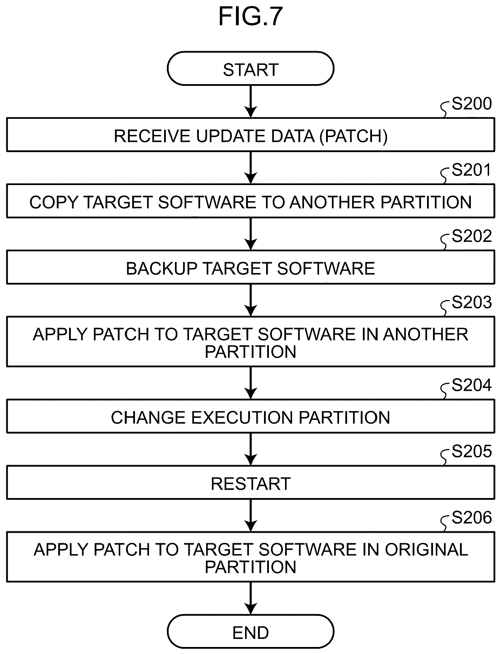

Next, processing of applying a patch (patch application processing) will be described with reference to FIGS. 6A to 6D and 7. FIGS. 6A to 6D are diagrams each illustrating a state of patch application processing according to the second embodiment. FIG. 7 is a flowchart illustrating a procedure of the patch application processing according to the second embodiment.

First, the data reception unit 201 receives a patch including update data (step S200). The received patch is stored in the storage device 3. In the example of FIGS. 6A to 6D the patch (patch A) of software A is received and stored in partition 2 of the storage device 3 (FIG. 6A).

The data copy unit 204 copies the patch application target software to a partition different from the partition storing the target software (step S201). In the example of FIGS. 6A to 6D, software A stored in partition 1 is copied to partition 2 (FIG. 6A).

The data copy unit 204 creates a backup of the target software copied to another partition (step S202). In the example of FIGS. 6A to 6D, a backup of software A of partition 2 is created (FIG. 6B).

Next, the patch application unit 210 applies a patch to the target software copied to another partition (step S203). In the example of FIGS. 6A to 6D, a patch is applied to software A of partition 2 (FIG. 6C).

Subsequently, the parameter changing unit 202 changes the execution partition so that the updated software A is executed at the next startup of the OS (step S204). In the example of FIGS. 6A to 6D, the execution partition of software A is changed from partition 1 to partition 2. Subsequently, the restart unit 203 restarts the OS (step S205).

When the OS starts by restart in step S109, the patch application unit 210 applies a patch to the target software of the original partition (step S206). In the example of FIGS. 6A to 6D, a patch is applied to software A in partition 1 (FIG. 6D). After the update processing of software A is completed, the backup data of software A may be deleted as illustrated in FIG. 6D or may be left as a backup. In a case where the backup data of software A is left as a backup, for example, software A can be returned to the state before the update using the backup when a failure occurs in the updated software A.

In this manner, the present embodiment allows for double storage of the same software to which the patch is applied in different partitions. Therefore, even when damage occurs in one partition, it is possible to recover with data in the other partition.

### Third embodiment

In a third embodiment, the update processing is managed by flag information. Hereinafter, in the description of the third embodiment, description of the same parts as those of the first embodiment will be omitted, and portions different from those of the first embodiment will be described.

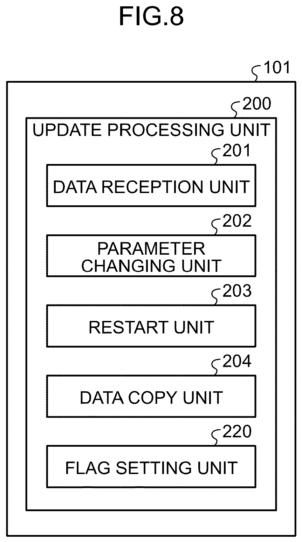

FIG. 8 is a functional block diagram of an update processing unit 200 according to the second embodiment. A difference from FIG. 2 is that update processing unit 200 further includes a flag information setting unit 220.

The flag information setting unit 220 sets flag information for managing update processing. Here, the setting of the flag information includes generation of the flag information and change of the flag information.

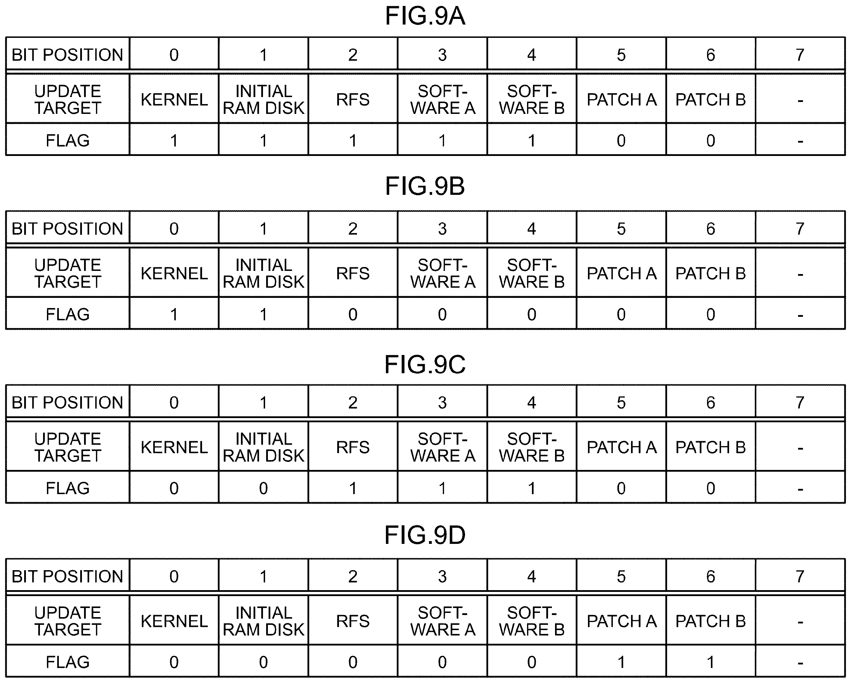

FIGS. 9A to 9D are diagrams each illustrating an example of flag information according to the third embodiment. FIGS. 9A to 9D illustrate 8-bit flag information capable of managing eight update targets. Here, each update target is allocated to each bit position, and the value of the flag at each bit position indicates the value of each update target flag. In addition, patch A indicates a patch of software A, and patch B indicates a patch of software B.

In FIGS. 9A to 9D, in a case where the update target is other than the patch, the flag value "1" indicates that the update is to be performed, and the flag value "0" indicates that the update is not to be performed. When the update target is a patch, a flag value "1" indicates that the patch is included in update data, and a flag value "0" indicates that the patch is not included in the update data. In addition, "-" in the drawing indicates that the bit position is unused.

FIG. 9A is an example of the flag information generated in a case where the update data includes the updated data of all the update targets and does not include a patch. FIG. 9B illustrates an example of the flag information generated in a case where the update data includes only the updated startup data. FIG. 9C illustrates an example of the flag information generated in a case where the update data includes only the updated software or the like. FIG. 9D is an example of the flag information generated in a case where the update data includes only the patch of the software.

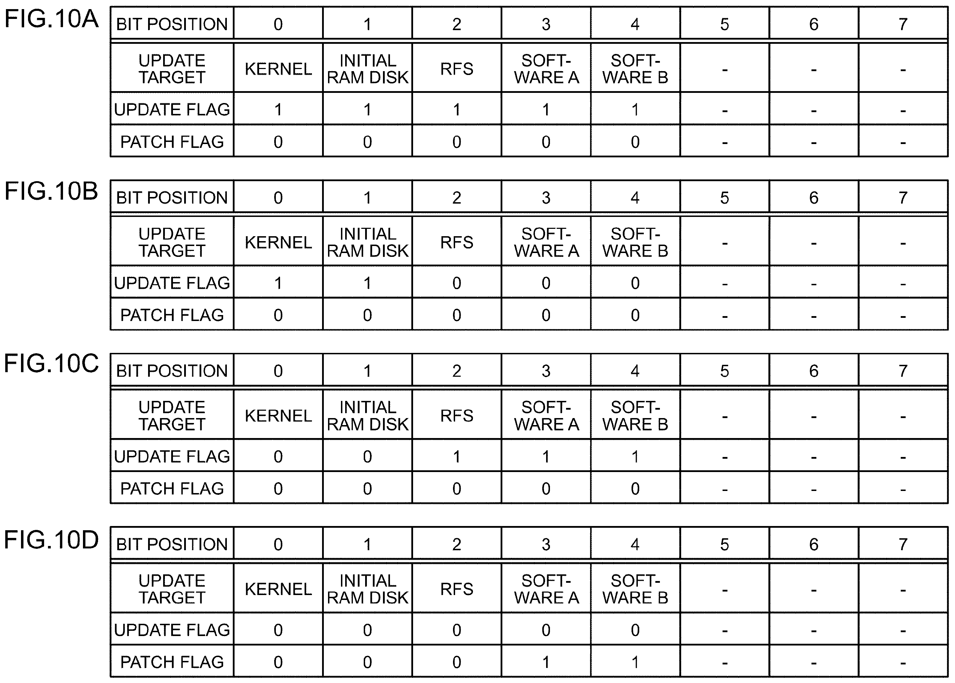

FIGS. 10A to 10D are diagrams each illustrating another example of the flag information according to the third embodiment. The difference from FIGS. 9A to 9D is that the flag information includes an update flag and a patch flag. The update flag indicates whether the updated data of each update target is included in the update data, while the patch flag indicates whether each patch is included in the update data. The update data corresponding to FIGS. 10A and 10B is the same as the update data corresponding to FIGS. 9A and 9B.

The flag information setting unit 220 analyzes the update data to generate flag information as illustrated in FIGS. 9A to 9D and FIGS. 10A to 10D, and changes the flag information in accordance with the progress of the update processing. For example, when the kernel update is completed, the flag information setting unit 220 changes the flag of the kernel in FIG. 9A and the update flag of the kernel in FIG. 10A from 1 to 0. In addition, for example, when the application of the patch to software A is completed, the flag information setting unit 220 changes the flag of patch A in FIG. 9D and the patch flag of software A in FIG. 10A from 1 to 0. With this operation, when all the values of the flag information become 0, it is possible to judge that the update has been normally completed.

The value "1" indicating flag information is an example of a first value, and the value "0" indicating flag information is an example of a second value. The definition of the value of the flag information is not limited to the above, and for example, a target to be updated may be defined as the value "0", and a target not to be updated may be defined as the value "1".

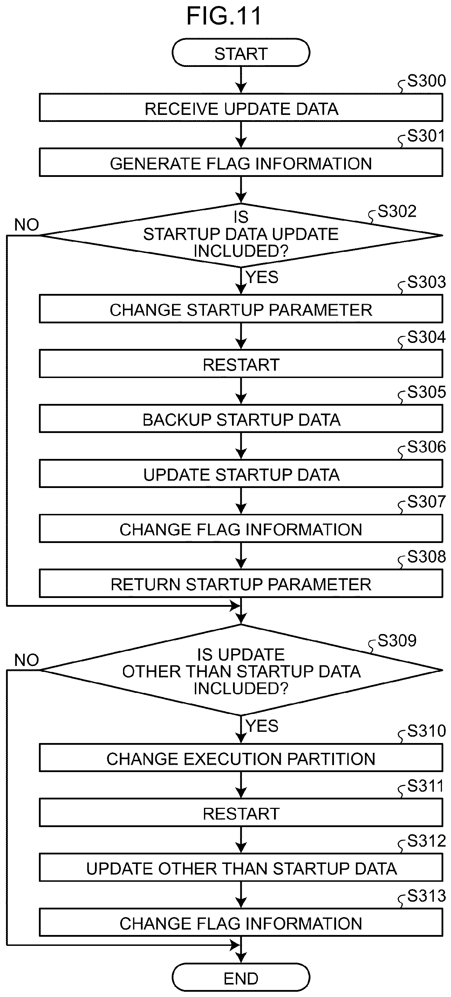

FIG. 11 is a flowchart illustrating a procedure of update processing according to the third embodiment. The procedure is different from FIG. 4 in including additional steps S301, S307, and S313 for flag setting and updating. The operations in steps S300, S302 to S306, and S308 to S312 in FIG. 11 are similar to the operations in steps S100, S101 to S105, and S106 to S110 in FIG. 4, and thus, description thereof is omitted.

The flag information setting unit 220 analyzes the update data to generate flag information (step S301). The flag information setting unit 220 updates the flag information so as to indicate the completion of the update of the startup data (step S307), and updates the flag information so as to indicate the completion of the update of the data other than the startup data (step S313).

In this manner, according to the present embodiment, the update processing can be managed using the flag information.

As described above, according to the first to third embodiments, the backup of the startup data created at the time of update is stored in the storage device 3 having a large storage capacity, making it possible to prevent the shortage of the storage capacity of the EEPROM 103 during the backup.

The program executed by the information processing apparatus 10 according to each embodiment described above is provided by being recorded in a computer-readable recording medium such as a CD-ROM, a flexible disk (FD), a CD-R, or a Digital Versatile Disk (DVD) as a file in an installable format or an executable format.

Furthermore, the program executed by the information processing apparatus 10 according to each embodiment may be stored in a computer connected to a network such as the Internet and provided by being downloaded via the network. Furthermore, the program executed by the information processing apparatus 10 according to each embodiment may be provided or distributed via a network such as the Internet.

In addition, the program of each embodiment may be provided by being preliminarily incorporated in the ROM or the like.

The program executed by the information processing apparatus 10 of each embodiment has a module configuration including each unit (the data reception unit 201, the parameter changing unit 202, the restart unit 203, and the data copy unit 204) included in the update processing unit 200 described above. In actual hardware, the CPU (processor) reads and executes the program from the recording medium, so as to load and generate each unit described above in the main storage device.

Each function of each embodiment described above can be implemented by one or a plurality of processing circuits. Here, the "processing circuit" in the present specification includes a device such as a processor programmed to execute each function by software like a processor implemented by an electronic circuit, an Application Specific Integrated Circuit (ASIC), a Digital Signal Processor (DSP), a Field Programmable Gate Array (FPGA), and a conventional circuit module, designed to execute each function described above.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus comprising:
a first storage medium storing a startup program configured to start an operating system;
a second storage medium storing startup data of the operating system, and having a storage capacity equal to or larger than a storage capacity of the first storage medium;
a third storage medium storing one or more pieces of software and user data, and having a storage capacity larger than the storage capacity of the second storage medium; and
an update processor configured to update at least one of the startup data and the software, wherein
the update processor is configured to: when updating the startup data,
store updated startup data in the third storage medium;
start the operating system using the updated startup data stored in the third storage medium;
store, in the third storage medium, the startup data stored in the second storage medium; and
replace the startup data stored in the second storage medium with the updated startup data.

2. The information processing apparatus according to claim 1, wherein
the update processor is configured to: when the updating the software,
store updated software in a different region of the third storage medium than the software before update;
switch from a setting to use the software before the update to a setting to use the updated software; and
replace the software before the update with the updated software.

3. The information processing apparatus according to claim 2, wherein
the update processor is configured to: when updating the software by applying a patch,
store the patch in the third storage medium;
store a copy of the software in a different region of the third storage medium than the software; and
apply the patch to the software, execute the software to which the patch has been applied, and then apply the patch to the copy of the software.

4. The information processing apparatus according to claim 1, wherein the update processor is configured to generate flag information indicating a target to be updated with a first value and indicating a target not to be updated with a second value different from the first value, and change the flag information such that a target for which update has been completed is to be indicated with the first value.

5. The information processing apparatus according to claim 1, wherein the update processor is configured to start the operating system using the updated startup data stored in the third storage medium by changing a parameter indicating a read destination of the startup data.

6. The information processing apparatus according to claim 3, wherein the update processor is configured to create a backup of the software before update when updating the software by applying the patch.

7. The information processing apparatus according to claim 4, wherein the update processor is configured to receive update data including at least any of the updated startup data, the updated software, and a patch.

8. The information processing apparatus according to claim 7, wherein
in a case where the target of the flag information is the patch,
the first value indicates that the update data includes the patch, and
the second value indicates that the update data does not include the patch.

9. The information processing apparatus according to claim 7, wherein the flag information includes an update flag and a patch flag, the update flag indicating whether the update data includes updated data, the patch flag indicating whether update data include the patch.

10. The information processing apparatus according to any one of claims 1 to 9, wherein
the startup data comprises a kernel and an initial RAM disk.

11. A computer-readable medium including programmed instructions that cause a computer to execute:
updating at least one of: startup data of an operating system; and one or more pieces of software, the operating system being stored in a second storage medium having a storage capacity equal to or larger than a storage capacity of a first storage medium storing a startup program configured to start the operating system, the one or more pieces of software being stored in a third storage medium having a storage capacity equal to or larger than the storage capacity of the second storage medium, wherein
the programmed instructions cause the computer to execute: when updating the startup data,
storing updated startup data in the third storage medium;
starting the operating system using the updated startup data stored in the third storage medium;
storing, in the third storage medium, the startup data stored in the second storage medium; and
replacing the startup data stored in the second storage medium with the updated startup data.

12. The computer-readable medium according to claim 11, wherein
the programmed instructions cause the computer to execute: when updating the software,
storing updated software in a different region of the third storage medium than the software before update;
switching from a setting to use the software before the update to a setting to use the updated software; and
replacing the software before the update with the updated software.

13. The computer-readable medium according to claim 12, wherein
the programmed instructions cause the computer to execute: when updating the software by applying a patch,
storing the patch in the third storage medium;
storing a copy of the software in a different region of the third storage medium than the software; and
applying the patch to the software, executing the software to which the patch has been applied, and then applying the patch to the copy of the software.

14. The computer-readable medium according to claim 11, wherein the programmed instructions cause the computer to execute generating flag information indicating a target to be updated with a first value and indicating a target not to be updated with a second value different from the first value, and changing the flag information such that a target for which update has been completed is to be indicated with the first value.

15. The computer-readable medium according to claim 11, wherein the programmed instructions cause the computer to execute starting the operating system using the updated startup data stored in the third storage medium by changing a parameter indicating a read destination of the startup data.
